(19)

Europäisches
Patentamt
European
Patent Office
Office européen
des brevets

(11) **EP 3 176 000 A1**

(12) **EUROPEAN PATENT APPLICATION**

(43) Date of publication:
**07.06.2017 Bulletin 2017/23**

(51) Int Cl.:
*B60C 1/00* *(2006.01)* *C08J 3/22* *(2006.01)*
*C08L 9/06* *(2006.01)*

(21) Application number: **16198017.2**

(22) Date of filing: **09.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.12.2015 KR 20150169814**

(71) Applicant: **Hankook Tire Co., Ltd.**
**Seoul 135-723 (KR)**

(72) Inventor: **Kim, Byung Lip**
**305-313 Daejeon (KR)**

(74) Representative: **Petraz, Gilberto Luigi et al**
**GLP S.r.l.**
**Viale Europa Unita, 171**
**33100 Udine (IT)**

(54) **RUBBER COMPOSITION FOR TIRE TREAD AND TIRE MANUFACTURED BY USING THE SAME**

(57) Provided are a rubber composition for tire tread and a tire produced using this rubber composition. The rubber composition for tire tread includes 100 parts by weight of a raw material rubber, 10 to 30 parts by weight of carbon black, and 10 to 80 parts by weight of a master batch including a synthetic rubber that contains a high cis-1,4-polybutadiene rubber matrix and syndiotactic 1,2-polybutadiene dispersed in the rubber matrix. The rubber composition for tire tread can enhance the cut-chip performance and the initial grip performance of a tire produced therefrom.

EP 3 176 000 A1

**Description**

BACKGROUND OF THE INVENTION

1. Field of the Invention

The present invention relates to a rubber composition for tire tread, capable of providing a tire having enhanced cut-chip performance and enhanced initial grip performance, and a tire produced using this rubber composition.

2. Description of the Related Art

Conventional off-road trucks, small-sized trucks, passenger cars, off-road racing cars and the like may undergo rapid decrease in abrasion resistance and durability during off-road driving, due to inferior cut-chip performance. Therefore, the overall performance of the tire during driving is deteriorated.

In order to enhance the cut-chip performance, methods of increasing the filling amount of carbon black, reducing the amount of oil used, or increasing the amount of a reinforcing resin, have been conventionally used. However, when the above-described methods of increasing or decreasing the quantities are used, the width of change of physical properties increases, and particularly in a case in which off-road driving is performed at high speed, cutting and chipping occur at high rates. Thus, a problem of decrease in durability and abrasion resistance emerges, and difficulties are faced during driving.

In order to overcome the problems of conventional technologies as described above and to enable long-term driving under off-road conditions on rough road surfaces, there is a demand for the development of a tire having excellent durability, abrasion resistance, cut-chip performance and grip performance.

SUMMARY OF THE INVENTION

An object of the present invention is to provide a rubber composition for tire tread having enhanced cut-chip performance and enhanced initial grip performance.

Another object of the present invention is to provide a rubber composition for tire tread, which can maintain durability and abrasion resistance performance even after driving for a long period of time on rough road surfaces.

Another object of the present invention is to provide an off-road tire produced using the rubber composition for tire tread described above.

In order to achieve the objects described above, according to an aspect of the present invention, there is provided a rubber composition for tire tread, the rubber composition including 100 parts by weight of a raw material rubber, 10 to 30 parts by weight of carbon black, and 10 to 80 parts by weight of a master batch, the master batch including a synthetic rubber including a high cis-1,4-polybutadiene rubber matrix and a syndiotactic 1,2-polybutadiene dispersed in the rubber matrix.

The raw material rubber may be any one selected from the group consisting of a polyisoprene rubber, a polybutadiene rubber, a conjugated diene-aromatic vinyl copolymer, a nitrile-conjugated diene copolymer, a hydrogenated nitrile-butadiene rubber, an olefin rubber, an ethylene-propylene rubber modified with maleic acid, a butyl rubber, a copolymer of isobutylene and an aromatic vinyl, a copolymer of isobutylene and a diene monomer, an acrylic rubber a halogenated rubber, a chloroprene rubber, and mixtures thereof.

The high cis-1,4-polybutadiene rubber may have a weight average molecular weight of 1,200 to 2,700 g/mol.

The high cis-1,4-polybutadiene rubber may have a cis-1,4 content of 95% to 99% by weight, and a degree of crystallinization of 70% to 80%.

The master batch may further include a raw material rubber, carbon black, and a softening agent.

The master batch may include 50 to 120 parts by weight of the raw material rubber, 20 to 90 parts by weight of carbon black, and 80 to 90 parts by weight of the softening agent, with respect to 100 parts by weight of the synthetic rubber.

The rubber composition for tire tread may further include 20 parts to 90 parts by weight of silica, 40 parts to 120 parts by weight of a reinforcing agent having silica and carbon black mixed therein, 0.5 parts to 4.0 parts by weight of a vulcanizer, 0.5 parts to 2.0 parts by weight of a vulcanization accelerator, and 0.5 parts to 2.0 parts by weight of an aging inhibitor, with respect to 100 parts by weight of the raw material rubber.

According to another aspect of the present invention, there is provided a tire produced using the rubber composition for tire tread described above.

The tire may be any one selected from the group consisting of a tire for an off-road truck, a tire for a small-sized truck, a tire for a passenger car, and a tire for off-road racing.

The present invention can provide a rubber composition for tire tread having enhanced cut-chip performance and enhanced initial grip performance.

The rubber composition for tire tread of the present invention can maintain high durability and high abrasion resistance performance during driving for a long period of time on rough road surfaces.

DETAILED DESCRIPTION OF THE PREFERRED EMBODIMENTS

Hereinafter, the present invention will be described in more detail.

The rubber composition for tire tread according to an embodiment of the present invention is a rubber composition for tire tread, which includes 100 parts by weight of a raw material rubber, 10 parts to 30 parts by weight of carbon black, and 10 parts to 80 parts by weight of a master batch, and in which the master batch includes a synthetic rubber including a high cis-1,4-polybutadiene rubber matrix and a syndiotactic 1,2-polybutadiene dispersed in the rubber matrix.

(1) Raw material rubber

The raw material rubber may be any one selected from the group consisting of a polyisoprene rubber, a polybutadiene rubber, a conjugated diene-aromatic vinyl copolymer, a nitrile-conjugated diene copolymer, a hydrogenated nitrile-butadiene rubber, an olefin rubber, an ethylene-propylene rubber modified with maleic acid, a butyl rubber, a copolymer of isobutylene and an aromatic vinyl, a copolymer of isobutylene and a diene monomer, an acrylic rubber, a halogenated rubber, a chloroprene rubber, and mixtures thereof.

(2) Carbon black

Furthermore, in regard to the rubber composition for tire tread, examples of the carbon black include furnace blacks (furnace carbon blacks) such as super abrasion furnace (SAF), intermediate super abrasion furnace (ISAF), high abrasion furnace (HAF), medium abrasion furnace (MAF), fast extruding furnace (FEF), semi-reinforcing furnace (SRF), general purpose furnace (GPF), automatic processing furnace (APF), fine furnace (FF), conductive furnace (CF), special color furnace (SCF), and extra-conductive furnace (ECF) carbon blacks; acetylene black (acetylene carbon black); thermal blacks (thermal carbon blacks) such as fine thermal (FT) and medium thermal (MT): channel blacks (channel carbon blacks) such as easy processing channel (EPC), medium processing channel (MPC), and conductive channel (CC) carbon blacks; and graphite. The carbon black is preferably high abrasion furnace (HAF) carbon black.

The HAF carbon black has high abrasion resistance, as well as excellent heat resistance with appropriate accumulation of heat generated as a result of periodical stress exerted on the tire.

More preferably, the HAF carbon black may have a specific surface area of 80 to 120 $m^2/g$, or 80 to 100 $m^2/g$. In a case in which the specific surface area of the HAF carbon black is less than 80 $m^2/g$, there is a risk of crack generation, and in a case in which the specific surface area is more than 120 $m^2/g$, there is a risk that heat resistance may be deteriorated.

According to the present invention, when a master batch including the high cis-1,4-polybutadiene rubber is used for the rubber composition for tire tread, the carbon black content used in existing reinforcing materials can be reduced to 10 parts to 30 parts by weight with respect to 100 parts by weight of the raw material rubber, which is smaller than the existing content used. When the content of carbon black is reduced, it may be helpful for enhancing the grip performance. If the content of carbon black is less than 10 parts by weight, the tire reinforcing properties improving effect resulting from the use of carbon black is negligible, and if the content is more than 30 parts by weight, there is a risk that processability of the rubber composition may be deteriorated.

(3) Master batch

The master batch includes a synthetic rubber including a high cis-1,4-polybutadiene rubber matrix and a syndiotactic 1,2-polybutadiene dispersed in the rubber matrix.

The high cis-1,4-polybutadiene rubber may have a weight average molecular weight of 1,200 to 2,700 g/mol. If the weight average molecular weight is less than 1,000 g/mol, a problem of processability deterioration may occur, and if the weight average molecular weight is more than 2,700 g/mol, it may be difficult to disperse the synthetic rubber in the master batch.

Furthermore, the high cis-1,4-polybutadiene rubber may have a cis-1,4 content of 95% to 100% by weight, and a degree of crystallization of 70% to 80%.

If the cis-1,4 content is less than 95% by weight, synthesis does not occur, and a problem that the polymer is not crystallized may occur. If the cis-1,4 content is high, there is an advantage that crystallization proceeds rapidly, and even if filler is introduced in a smaller amount during mixing of the rubber mixture, reinforcing properties may be secured.

If the degree of crystallization is less than 70%, there may be a problem that crystallization is achieved insufficiently. If the degree of crystallization is more than 80%, there may be a problem that crystallization proceeds excessively rapidly, and an even distribution may not be obtained.

The term syndiotactic 1,2-polybutadiene means a butadiene rubber in which a fibrous resin is dispersed in a high cis-butadiene rubber in the polymerization stage, and specifically means a polymer in which syndiotactic 1,2-polybutadiene is microdispersed in high cis-1,4-polybutadiene.

The syndiotactic 1,2-polybutadiene may have a Mooney viscosity of 30 to 65, and a syndiotactic 1,2-polybutadiene having a n-hexane-insoluble fraction at the boiling point of n-hexane of 1% to 20% by weight and a n-hexane-soluble fraction of 80% to 99% by weight, is preferred.

In a case in which the Mooney viscosity is less than 30, the elongation may increase, and problems may occur. In a case in which the Mooney viscosity is more than 65, there may be a problem with the cut-chip performance.

The syndiotactic 1,2-polybutadiene is characterized by having a high melting point and high crystallinity. In a case in which the syndiotactic 1,2-polybutadiene has a high melting point and high crystallinity, it is advantageous in that the resistance to external impact becomes stronger. The melting point of the syndiotactic 1,2-polybutadiene is preferably 80°C to 150°C.

The synthetic rubber including the high cis-1,4-polybutadiene rubber matrix and the syndiotactic 1,2-polybutadiene dispersed in the rubber matrix can be produced into a master batch in advance, for the purpose of increasing the affinity with carbon black and the dispersity.

As a result, dispersibility can be enhanced in the course of blending, and a tire produced using this master batch exhibits a durability that is 2 to 5.5 times higher than that of a tire containing carbon black only, which is used for general purposes during driving.

In a case in which a synthetic rubber containing the high cis-1,4-polybutadiene rubber matrix and the syndiotactic 1,2-polybutadiene dispersed in the rubber matrix is used alone, the rubber hardness is high, and even in a case in which a master batch that does not include the synthetic rubber is used, the amount of carbon loading is large, so that high hardness is obtained. Then, when the synthetic rubber is used in the form of a master batch, a high-hardness composition which exhibits hardness to an extent that causes sheet breakage may be obtained. In order to overcome the problems described above, a master batch is produced in the present invention by a method of producing a sheet having a thickness of 0.5 to 3.0 cm from the synthetic rubber including syndiotactic 1,2-polybutadiene dispersed in a high cis-1,4-polybutadiene rubber matrix, at a high temperature of 50°C to 150°C through rolling, subsequently cutting the synthetic rubber into a certain length, and mixing the cut pieces.

In the case of the master batch used for the present invention, the master batch has an advantage that due to high dispersibility, heat generation proceeds rapidly and evenly over the entire tread, and deterioration of physical properties of certain parts is prevented. Therefore, the master batch can be used for a variety of purposes.

When a master batch including the synthetic rubber containing the high cis-1,4-polybutadiene rubber matrix and the syndiotactic 1,2-polybutadiene dispersed in the rubber matrix is applied to a rubber composition for tire tread for a tire for passenger car for high performance off-road driving or a tire for racing, improvement of the chip-cut shape can be expected while initial induction of grip performance and latter maintenance of grip performance of the tire tread blocks during high speed off-road driving is achieved. As a result, a rubber composition for tire tread that has enhanced durability and enhanced abrasion resistance performance can be produced, and driving for a long period of time under tougher off-road conditions can be achieved.

The master batch may further include a raw material rubber, carbon black, and a softening agent. The master batch may include 50 parts to 120 parts by weight of the raw material rubber, 20 parts to 90 parts by weight of carbon black, and 80 to 90 parts by weight of the softening agent, with respect to 100 parts by weight of the synthetic rubber.

The raw material rubber may be the same as the raw material rubber mentioned above.

In a case in which the content of carbon black is less than 20 parts by weight, reinforcing properties may be deteriorated, and in a case in which the content of carbon black is more than 90 parts by weight, the Mooney viscosity of the master batch may increase excessively, and production of the master batch may face difficulties.

The softening agent means an oil-like material that is added to the rubber composition in order to facilitate processing by imparting plasticity to the rubber, or to decrease the hardness of vulcanized rubber, which is used at the time of blending rubber or at the time of producing the rubber composition. The softening agent means a process oil, or an oil included in the rubber composition. Regarding the softening agent, any one selected from the group consisting of petroleum-based oil, plant oils and fats, and combinations thereof can be used; however, the softening agent according to the present invention is not limited to these.

The petroleum-based oil may be any one selected from the group consisting of paraffinic oil, naphthenic oil, aromatic oil, and combinations thereof.

Representative examples of the paraffinic oil include P-1, P-2, P-3, P-4, P-5, and P-6 manufactured by Michang Oil Industrial Co., Ltd., and representative examples of the naphthenic oil include N-1, N-2, and N-3 manufactured by Michang Oil Industrial Co., Ltd. Representative examples of the aromatic oil include A-2 and A-3 manufactured by Michang Oil Industrial Co., Ltd.

However, along with the recent rise of environmental awareness, it is known that when the content of polycyclic aromatic hydrocarbons (hereinafter, referred to as "PAHs") included in the aromatic oil is 3% by weight or more, there is a high possibility of the onset of cancers. Therefore, a treated distillate aromatic extract (TDAE) oil, a mild extraction solvate (MES) oil, a residual aromatic extract (RAE) oil, or a heavy naphthenic oil can be preferably used.

Particularly, regarding the oil used as the softening agent, a TDAE oil containing 15% to 25% by weight of aromatic components, 27% to 37% by weight of naphthenic components, and 38% to 58% by weight of paraffinic components in the softening agent, in which the total content of PAH components is 3% by weight or less with respect to the total amount of the oil, and the dynamic viscosity is 95 or higher (210°F SUS), can be preferably used.

The above-mentioned TDAE oil makes the low temperature characteristics and fuel consumption performance of a tire tread containing the TDAE oil excellent, and also has advantageous characteristics for environmental factors such as the possibility of carcinogenesis of the PAHs.

Regarding the plant oils and fats, any one selected from the group consisting of castor oil, cottonseed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, safflower oil, tung oil, and combinations thereof can be used.

(4) Other additives

The tire rubber composition may optionally further include various additives such as a reinforcing agent, a vulcanizer, a vulcanization accelerator, an aging inhibitor, an activator, and a softening agent. Regarding the various additives, any additives that are conventionally used in the art to which the present invention is pertained can be used. The contents of these additives are determined according to the mixing ratios used in conventional rubber composition for tire, and are not particularly limited.

The rubber composition for tire tread described above may further include silica as a reinforcing agent, and a reinforcing agent including a mixture of silica and carbon black can be used. Furthermore, a silane coupling agent can also be used to enhance dispersibility of the silica.

In order to obtain a rubber composition for tire tread suitable for the purpose of the present invention, it is preferable to use a highly dispersible silica having a nitrogen adsorption specific surface area of 160 to 180 m$^2$/g and a CTAB value of 150 to 170 m$^2$/g in an amount of 20 to 90 parts by weight relative to 100 parts by weight of the raw material rubber.

If the content of the silica is less than 20 parts by weight, the braking performance may be poor, and if the content is more than 90 parts by weight, the abrasion resistance performance and the low fuel consumption performance may become inferior.

Regarding the vulcanizer, a sulfur-based vulcanizer, an organic peroxide, a resin vulcanizer, or a metal oxide such as magnesium oxide can be used.

Regarding the sulfur-based vulcanizer, inorganic vulcanizers such as powdered sulfur (S), insoluble sulfur (S), precipitated sulfur (S), and colloidal sulfur; and organic vulcanizers such as tetramethylthiuram disulfide (TMTD), tetraethylthiuram disulfide (TETD), and dithiodimorpholine can be used. Regarding the sulfur vulcanizer, specifically, elemental sulfur or a vulcanizer capable of producing free sulfur, for example, amine disulfide or polymeric sulfur, can be used.

Regarding the organic peroxide, any one selected from the group consisting of benzoyl peroxide, dicumyl peroxide, di-t-butyl peroxide, t-butylcumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexane, 1,3-bis(t-butylperoxypropyl)benzene, di-t-butylperoxy-diisopropylbenzene, t-butylperoxybenzene, 2,4-dichlorobenzoyl peroxide, 1,1-dibutylperoxy-3,3,5-trimethylsiloxane, n-butyl-4,4-di-t-butyl peroxyvalerate, and combinations thereof can be used.

It is preferable that the vulcanizer is included in an amount of 0.5 to 4.0 parts by weight relative to 100 parts by weight of the raw material rubber, from the viewpoint that the vulcanizer can make the raw material less sensitive to heat and chemically stable as a result of an appropriate vulcanizing effect.

The vulcanization accelerator means an accelerator that accelerates the rate of vulcanization or accelerates a delaying action in the initial vulcanization stage.

Regarding the vulcanization accelerator, any one selected from the group consisting of a sulfenamide-based vulcanization accelerator, a thiazole-based vulcanization accelerator, a thiuram-based vulcanization accelerator, a thiourea-based vulcanization accelerator, a guanidine-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, and combinations thereof can be used.

Regarding the sulfenamide-based vulcanization accelerator, for example, any one sulfenamide-based compound selected from the group consisting of N-cyclohexyl-2-benzothiazyl sulfenamide (CBS), N-tert-butyl-2-benzothiazyl sulfenamide (TBBS), N,N-dicyclohexyl-2-benzothiazyl sulfenamide, N-oxydiethylene-2-benzothiazyl sulfenamide, N,N-diisopropyl-2-benzothiazole sulfenamide, and combinations thereof can be used.

Regarding the thiazole-based vulcanization accelerator, for example, any one thiazole-based compound selected from the group consisting of 2-mercaptobenzothiazole (MBT), dibenzothiazyl disulfide (MBTS), sodium salt of 2-mercaptobenzothiazole, zinc salt of 2-mercaptobenzothiazole, copper salt of 2-mercaptobenzothiazole, cyclohexylamine salt of 2-mercaptobenzothiazole, 2-(2,4-dinitrophenyl)mercaptobenzothiazole, 2-(2,6-diethyl-4-morpholinothio)benzothiazole, and combinations thereof can be used.

Regarding the thiuram-based vulcanization accelerator, for example, any one thiuram-based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and combinations thereof can be used.

Regarding the thiourea-based vulcanization accelerator, for example, any one thiourea-based compound selected from the group consisting of thiacarbamide, diethylthiourea, dibutylthiourea, trimethylthiourea, di-ortho-tolylthiourea, and combinations thereof can be used.

Regarding the guanidine-based vulcanization accelerator, for example, any one guanidine-based compound selected from the group consisting of diphenylguanidine, di-ortho-tolylguanidine, triphenylguanidine, ortho-tolylbiguanide, diphenylguanidine phthalate, and combinations thereof can be used.

Regarding the dithiocarbamic acid-based vulcanization accelerator, for example, any one dithiocarbamic acid-based compound selected from the group consisting of zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, cadmium diamyldithiocarbamate, and combinations thereof can be used.

Regarding the aldehyde-amine-based or aldehyde-ammonia-based vulcanization accelerator, for example, an aldehyde-amine-based or aldehyde-ammonia-based compound selected from the group consisting of acetaldehyde-aniline reaction product, butylaldehyde-aniline condensate, hexamethylenetetramine, acetaldehyde-ammonia reaction product, and combinations thereof can be used.

Regarding the imidazoline-based vulcanization accelerator, for example, an imidazoline-based compound such as 2-mercaptoimidazoline can be used, and regarding the xanthate-based vulcanization accelerator, for example, a xanthate-based compound such as zinc dibutylxanthogenate can be used.

The vulcanization accelerator can be included in an amount of 0.5 to 2.0 parts by weight relative to 100 parts by weight of the raw material rubber, in order to maximize the increase of productivity through acceleration of the rate of vulcanization and the enhancement of the physical properties of rubber.

Since the master batch of the present invention includes zinc oxide and stearic acid, which are vulcanization acceleration aids, any additional vulcanization acceleration aid is not needed; however, a vulcanization acceleration aid may be additionally included.

A vulcanization acceleration aid is a compounding agent used in combination with the vulcanization accelerator in order to make the accelerating effect more satisfactory, and any one selected from the group consisting of an inorganic vulcanization acceleration aid, an organic vulcanization acceleration aid, and combinations thereof can be used.

Regarding the inorganic vulcanization acceleration aid, any one selected from the group consisting of zinc oxide (ZnO), zinc carbonate, magnesium oxide (MgO), lead oxide, potassium hydroxide, and combinations thereof can be used. Regarding the organic vulcanization acceleration aid, any one selected from the group consisting of stearic acid, zinc stearate, palmitic acid, linoleic acid, oleic acid, lauric acid, dibutylammonium oleate, derivatives thereof, and combinations thereof can be used.

Particularly, the zinc oxide and stearic acid mentioned above as vulcanization acceleration aids can be used together, and in this case, zinc oxide dissolves in stearic acid and forms an effective complex with the vulcanization accelerator. The complex then produces free sulfur during a vulcanization reaction, and thereby facilitates a crosslinking reaction of rubber.

In a case in which zinc oxide and stearic acid are used together, these compounds can be used in amounts of 1 to 5 parts by weight and 0.5 to 3 parts by weight, respectively, relative to 100 parts by weight of the raw material rubber, in order to allow the compounds to perform the role as appropriate vulcanization acceleration aids.

The aging inhibitor is an additive used to terminate a chain reaction by which a tire is spontaneously oxidized by oxygen. Regarding the aging inhibitor, any one selected from the group consisting of an amine-based aging inhibitor, a phenolic aging inhibitor, a quinoline-based aging inhibitor, an imidazole-based aging inhibitor, a carbamic acid metal salt, a wax, and combinations thereof can be appropriately selected and used.

Regarding the amine-based aging inhibitor, any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine, and combinations thereof can be used. Regarding the phenolic aging inhibitor, any one selected from the group consisting of 2,2'-methylene-bis(4-methyl-6-tert-butylphenol), 2,2'-isobutylidene-bis(4,6-dimethylphenol), 2,6-di-t-butyl-p-cresol, and combinations thereof can be used. Regarding the quinoline-based aging inhibitor, 2,2,4-trimethyl-1,2-dihydroquinoline and derivatives thereof can be used, and specifically, any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and combinations thereof can be used. Regarding the wax, a waxy hydrocarbon can be preferably used.

The aging inhibitor can be included in an amount of 0.5 to 2.0 parts by weight relative to 100 parts by weight of the raw material rubber, when conditions other than the aging preventive action are considered, such as that the aging inhibitor should have high dissolubility for rubber, should have low volatility, should be inert to rubber, and should not inhibit vulcanization.

The rubber composition for tire tread can be produced through a conventional two-stage continuous production process. That is, the rubber composition can be produced in an appropriate mixing machine using a first stage of subjecting the rubber composition to a thermomechanical treatment or kneading at a maximum temperature that reaches 110°C to 190°C, and preferably at a high temperature of 130°C to 180°C (referred to as "non-production" stage); and a second stage of subjecting the rubber composition to a mechanical treatment typically at a low temperature of below 110°C, for example, 40°C to 100°C, during a finishing stage in which the crosslinked system is mixed (referred to as "production" stage); however, the present invention is not intended to be limited to this.

The tire according to another embodiment of the present invention includes a tread part produced using the rubber composition for tire tread described above.

In regard to the method for producing a tire including a tread part using the rubber composition for tire tread, any method that is conventionally used for the production of tires is applicable. Therefore, detailed explanation will not be repeated in the present specification.

The tire is preferably any one selected from the group consisting of a tire for an off-road truck, a tire for a small-sized truck, a tire for a passenger car, and a tire for off-road racing.

Hereinafter, Examples of the present invention will be described in detail so that any person having ordinary skill in the art, to which the present invention is pertained can easily carry out the invention. However, the present invention can be realized in various different forms, and is not intended to be limited to the Examples described herein.

EXAMPLES

**[Production Example: Production of rubber composition]**

Rubber compositions for tire according to the following Examples and Comparative Examples were produced using the compositions described in the following Table 1. Production of the rubber compositions was carried out according to a conventional production method for a rubber composition, and there are not particular limitations thereon.

[Table 1]

| Item | Comparative Example 1 | Example 1 | Example 2 | Example 3 | Example 4 | Comparative Example 2 | Comparative Example 3 |
|---|---|---|---|---|---|---|---|
| Raw material rubber [1] | 125.5 | 115.5 | 85.5 | 65.5 | 45.5 | 25.5 | - |
| Carbon black [2] | 73.7 | 23.7 | 23.7 | 23.7 | 23.7 | 23.7 | 23.7 |
| Master batch including high cis-1,4-polybutadiene rubber [3] | - | 10.0 | 40.0 | 60.0 | 80.0 | 100.0 | 125.5 |
| Zinc oxide | 3.0 | 3.0 | 3.0 | 3.0 | 3.0 | 3.0 | 3.0 |
| Stearic acid | 1.0 | 1.0 | 1.0 | 1.0 | 1.0 | 1.0 | 1.0 |
| Free sulfur | 1.0 | 1.0 | 1.0 | 1.0 | 1.0 | 1.0 | 1.0 |
| Accelerator 1 [4] | 2.5 | 2.5 | 2.5 | 2.5 | 2.5 | 2.5 | 2.5 |
| Accelerator 2 [5] | 2 | 2 | 2 | 2 | 2 | 2 | 2 |

(unit: parts by weight) 1) Raw material rubber: styrene-butadiene rubber (styrene content: 37.5%, oil content: 50%) 2) Carbon black: N220 (N2SA: 111 $m^2$/g)

3) Master batch: A synthetic rubber including a high cis-1,4-polybutadiene rubber matrix and syndiotactic 1,2-polybutadiene dispersed in the high cis-1,4-polybutadiene rubber matrix was produced into a sheet having a thickness of 1.0 cm through a rolling operation for 30 minutes at 90°C, and then this was cut into a constant length. 1,200 g of the cut sheet pieces, 800 g of SBR1721 latex (product of Kumho Petrochemical Co., Ltd.), 750 g of carbon black, and 600 g of softening agent A#2 oil were introduced into a mixer and thoroughly mixed, and thus a master batch was obtained. The syndiotactic 1,2-polybutadiene mentioned above had a Mooney viscosity of 62 and a n-hexane-insoluble fraction of 17% by weight.

4) Accelerator 1: TT (thiuram-based vulcanization accelerator) 5) Accelerator 2: DPG

EP 3 176 000 A1

[Experimental Example: Analysis of physical properties of rubber compositions produced]

A tire having a size of 190/570R15 R213 and having its tread part constructed using each of the rubber compositions produced in the Examples and Comparative Examples described above was used, and the pneumatic pressure was set to 150 kPa. Such tires were mounted on a vehicle, and a test driver performed test driving continuously for 10 rounds of a circuit course (2 km) under dry conditions, subsequently the tires were detached from the vehicle, and the physical properties of the tire were measured. The results are presented in the following Table 2.

[Table 2]

| | Comparative Example 1 | Example 1 | Example 2 | Example 3 | Example 4 | Comparative Example 2 | Comparative Example 3 |
|---|---|---|---|---|---|---|---|
| Initial grip performance[1] | 4 | 8.5 | 10 | 9 | 8 | 7 | 6.5 |
| Latter stage grip performance[1] | 2 | 7 | 9 | 9 | 7 | 6.5 | 5 |
| 300% Modulus (MPa) [2] | 62.1 | 62.2 | 67.3 | 71.1 | 69.4 | 72.1 | 74.3 |
| Elongation (%) [3] | 790 | 861 | 839 | 821 | 801 | 760 | 742 |
| Abrasion resistance (Index) [4] | 100 | 163 | 172 | 186 | 169 | 159 | 148 |
| Cut-chip (Index) [5] | 5 | 5.5 | 6.0 | 7.5 | 8.0 | 7.7 | 7.2 |

* Grip performance scores: 1 (Very poor) ~ 10 (Very good) 1) Grip performance: After continuous driving for 10 rounds of the circuit course (2 km), the lap time was measured for each round, and the initial grip performance and the sustenance of grip performance were evaluated.

2) 300% Modulus: Measured according to the standards of ISO 37.

3) Elongation (%): Measured according to the standards of ISO 37.

4) Degree of abrasion: After continuous driving for 10 rounds of the circuit course (2 km), the tires were detached and thoroughly washed with water. Then, the weights of the tires were measured using a scale. The difference in the weight relative to the initial weight was checked, and the amount of wear was calculated and converted into an index. A higher value indicates superior abrasion resistance.

5) Cut-chip:

```
Cut-chip index calculation method
= Change in weight of tire (initial weight - weight
after driving)/10 × 0.4 + rating of driver's feeling × 0.3
+ rating of degree of block damage × 0.3
```

\* Rating of driver's feeling: Each driver evaluated the drive comfort depending on the cut-chip, and the average of the ratings of various drivers.

\* Rating of degree of block damage: The degree of block damage was rated from 1 to 10, and a sample with the most numerous cut-chips occurring was rated as 1, while a sample with the most satisfactory cut-chip performance was rated as 10.

As shown in Table 2, when a master batch including a high cis-1,4-polybutadiene rubber was used, the grip performance and abrasion resistance were enhanced compared to Comparative Example 1. It could be confirmed that when the master batch was used in an amount of 10 to 80 parts by weight, the grip performance and abrasion resistance were enhanced to the highest extent.

Particularly, in the case of Example 3 that included 60 parts by weight of the master batch, it could be confirmed that the cut-chip performance, degree of wear, elongation, modulus, and grip performance were all enhanced.

Thus, preferred embodiments of the present invention have been explained in detail; however, the scope of rights of the present invention is not intended to be limited to these, and various modifications and improvements made by a skilled person using the basic concept of the present invention defined in the following claims also belong to the scope of rights of the present invention.

**Claims**

1.  A rubber composition for tire tread, the rubber composition comprising:

    100 parts by weight of a raw material rubber;
    10 to 30 parts by weight of carbon black; and
    10 to 80 parts by weight of a master batch,
    the master batch including a synthetic rubber containing a high cis-1,4-polybutadiene rubber matrix and syndiotactic 1,2-polybutadiene dispersed in the rubber matrix.

2.  The rubber composition for tire tread according to claim 1,
    wherein the raw material rubber is any one selected from the group consisting of a polyisoprene rubber, a polybutadiene rubber a conjugated diene-aromatic vinyl copolymer, a nitrile-conjugated diene copolymer, a hydrogenated nitrile-butadiene rubber, an olefin rubber, an ethylene-propylene rubber modified with maleic acid, a butyl rubber, a copolymer of isobutylene and an aromatic vinyl, a copolymer of isobutylene and a diene monomer, an acrylic rubber, a halogenated rubber, a chloroprene rubber, and mixtures thereof.

3.  The rubber composition for tire tread according to claim 1,
    wherein the high cis-1,4-polybutadiene rubber has a weight average molecular weight of 1,200 to 2,700 g/mol.

4.  The rubber composition for tire tread according to claim 1,
    wherein the high cis-1,4-polybutadiene rubber has a cis-1,4 content of 95% to 99% by weight, and a degree of crystallinity of 70% to 80%.

5.  The rubber composition for tire tread according to claim 1,
    wherein the master batch further includes a raw material rubber, carbon black, and a softening agent.

6.  The rubber composition for tire tread according to claim 5,
    wherein the master batch includes:

    50 to 120 parts by weight of the raw material rubber;
    20 to 90 parts by weight of the carbon black; and
    80 to 90 parts by weight of the softening agent,

with respect to 100 parts by weight of the synthetic rubber.

7.  The rubber composition for tire tread according to claim 1,
    wherein the rubber composition for tire tread further comprises 20 to 90 parts by weight of silica, 40 to 120 parts by weight of a reinforcing agent having silica and carbon black mixed in, 0.5 to 4.0 parts by weight of a vulcanizing agent, 0.5 to 2.0 parts by weight of a vulcanization accelerator, and 0.5 to 2.0 parts by weight of an aging inhibitor, relative to 100 parts by weight of the raw material rubber.

8.  A tire produced using the rubber composition for tire tread according to claim 1.

9.  The tire according to claim 8,
    wherein the tire is any one selected from the group consisting of a tire for an off-road truck, a tire for a small-sized truck, a tire for a passenger car, and a tire for off-road racing.

Europäisches
Patentamt

European
Patent Office

Office européen
des brevets

# EUROPEAN SEARCH REPORT

**Application Number**

EP 16 19 8017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/099844 A1 (TAKEDA SHINYA [JP] ET AL) 9 April 2015 (2015-04-09)<br>* comparative example 4 *<br>* paragraph [0001] *<br>----- | 1-9 | INV.<br>B60C1/00<br>C08J3/22<br>C08L9/06 |
| X | EP 2 915 844 A1 (YOKOHAMA RUBBER CO LTD [JP]) 9 September 2015 (2015-09-09)<br>* comparative example 12 *<br>* paragraph [0001] *<br>----- | 1-9 | |
| X | JP 4 788843 B1 (YOKOHAMA RUBBER CO LTD) 5 October 2011 (2011-10-05)<br>* examples 2,5,6,8 *<br>* paragraph [0001] *<br>----- | 1-9 | |
| A | EP 2 607 099 A1 (GOODYEAR TIRE & RUBBER [US]) 26 June 2013 (2013-06-26)<br>* claims; examples *<br>----- | 1-9 | |

**TECHNICAL FIELDS SEARCHED (IPC)**

B60C
C08J
C08L

The present search report has been drawn up for all claims

| Place of search | Date of completion of the search | Examiner |
|---|---|---|
| Munich | 31 March 2017 | Baekelmans, Didier |

EPO FORM 1503 03.82 (P04C01)

## ANNEX TO THE EUROPEAN SEARCH REPORT
## ON EUROPEAN PATENT APPLICATION NO.

EP 16 19 8017

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2017

| Patent document cited in search report | | Publication date | Patent family member(s) | | Publication date |
|---|---|---|---|---|---|
| US 2015099844 | A1 | 09-04-2015 | CN | 104220509 A | 17-12-2014 |
| | | | DE | 112013002047 T5 | 05-03-2015 |
| | | | JP | 5569655 B2 | 13-08-2014 |
| | | | JP | WO2013157545 A1 | 21-12-2015 |
| | | | KR | 20140117691 A | 07-10-2014 |
| | | | US | 2015099844 A1 | 09-04-2015 |
| | | | WO | 2013157545 A1 | 24-10-2013 |
| EP 2915844 | A1 | 09-09-2015 | CN | 104755546 A | 01-07-2015 |
| | | | EP | 2915844 A1 | 09-09-2015 |
| | | | JP | 5500229 B2 | 21-05-2014 |
| | | | JP | 2014088502 A | 15-05-2014 |
| | | | KR | 20150059811 A | 02-06-2015 |
| | | | US | 2015298511 A1 | 22-10-2015 |
| | | | WO | 2014069358 A1 | 08-05-2014 |
| JP 4788843 | B1 | 05-10-2011 | JP | 4788843 B1 | 05-10-2011 |
| | | | JP | 2012007145 A | 12-01-2012 |
| EP 2607099 | A1 | 26-06-2013 | EP | 2607099 A1 | 26-06-2013 |
| | | | US | 2013153099 A1 | 20-06-2013 |

EPO FORM P0459

For more details about this annex : see Official Journal of the European Patent Office, No. 12/82